Europäisches Patentamt

European Patent Office

Office européen des brevets

(19)

(11) Publication number: **0 194 883**

**A2**

(12) **EUROPEAN PATENT APPLICATION**

(21) Application number: **86301809.9**

(22) Date of filing: **13.03.86**

(51) Int. Cl.⁴: **B 23 P 15/04**
**F 01 D 5/18**

(30) Priority: **13.03.85 US 711432**

(43) Date of publication of application:
**17.09.86 Bulletin 86/38**

(84) Designated Contracting States:
**BE CH DE FR GB IT LI NL SE**

(71) Applicant: **WESTINGHOUSE ELECTRIC CORPORATION**
**Westinghouse Building Gateway Center**
**Pittsburgh Pennsylvania 15235(US)**

(72) Inventor: **Holden, Paul Clarence**
**137 Hunt Club Lane**
**Newton Square Pennsylvania 19073(US)**

(74) Representative: **van Berlyn, Ronald Gilbert**
**23, Centre Heights**
**London, NW3 6JG(GB)**

(54) **Fabricated blade with spanwise cooling passages for gas turbine.**

(57) A gas-turbine turbine blade comprises two separate pieces assembled in clamshell fashion and bonded together, each piece including an air-foil part and a root part in monolithic form, the air-foil being tapered and twisted with changing cambers from hub to tip so that straight line spanwise-directed bores are precluded throughout at least a portion of the air-foil, at least one of the air-foil parts having grooves provided in its facing-parting-surface to form internal cooling passages in the air-foil section upon assembly.

FIG. I

1

# FABRICATED BLADE WITH SPANWISE COOLING PASSAGES FOR GAS TURBINE

This invention relates to a gas turbine blade, and in particular to a fabricated blade with spanwise cooling passages.

Many typical gas turbines for power plant and similar use have up to four rows of rotating turbine blades. At current levels of turbine inlet temperature, only the first and second rows of blades require cooling. This is currently accomplished in gas turbine engines made by the assignee of this application by providing spanwise holes which pass through the root and air-foil of the blades. The root portion of the hole is usually larger in diameter than the air-foil portion because the root portion is mainly performing a coolant supply function to the passages in the air-foil portion of the blade and it is desirable to do the supply function with as little pressure loss as possible. One way to provide the coolant holes is to drill the air-foil portion from tip to hub to intersect the root portion, which is drilled from the inner blade serration toward the blade hub. If the blades are cast blades, an alternate manufacturing approach is to cast the holes in situ using cores which are subsequently removed.

With either manufacturing approach it is very difficult to incorporate holes in air-foils which are not straight line. With current machines, the design limitation of requiring straight line holes has not introduced a problem. The air-foil shape of the first row of rotating blades has been such that straight air-foil cooling holes can readily be incorporated throughout the blade. For the second row of blades, the air-foil shape has been such that it is not possible to pass a straight hole near the leading edge and sometimes the trailing edge. However, the second row gas environment has been low enough in temperature that very little cooling is needed at the leading and trailing edges of the blade and the holes do not need to be very close to these edge extremities.

However, as turbine inlet temperatures increase, it will likely be necessary with future gas turbines to do more cooling at the second row extremities and also to cool the blades in the third row and eventually the fourth row. Particularly with the third and fourth row blades, a substantial aerodynamic compromise would be required to make it possible to cool the airflow with straight line holes. These blades twist and taper substantially from hub to tip and also usually contain curvatures in the spanwise direction to minimize aerodynamic losses.

The aim of this invention is to provide an arrangement for turbine blades of complex air-foil shapes which are provided with spanwise directed cooling passages which are not necessarily straight and therefore avoid any increase in aerodynamic losses due to compromise of the aerodynamic design.

According to the present invention, a gas turbine blade comprises a root part and an air-foil part, the air-foil part having cambers which change from a deep camber adjacent said root part to a relatively shallow camber at the air-foil extremity said air-foil part being progressively twisted and tapered between said root part and said extremity the air-foil part having a chord line at said air-foil extremity which is angularly displaced relative to the chord line of said air-foil part adjacent said root part said blade comprising a two-piece structure having facing-parting-surfaces in the air-foil part along camber-shaped lines, at least one of the pieces of said two-piece structure having a plurality of spanwise-extending grooves open to a corresponding plurality of grooves extending through said root part, said root part having facing-parting-surfaces adjacent said air-foil part along the camber lines of the air-foil thereat, said two pieces of said two-piece structure being bonded together in clamshell fashion said changing cambers and chord lines, and said twisted and tapered configuration, resulting in a contoured shape of the air-foil part precluding straight line spanwise-directed internal passages throughout at least a part of the air-foil part requiring passages for the flow of cooling air.

Conveniently, the turbine blade is of two-piece construction, each piece including an air-foil part and a root part with facing-parting-surfaces of the two parts preferably following the camber lines throughout the air-foil and with the root part facing-parting-surfaces adjacent the air-foil portion following the camber lines of the air-foil at the juncture of the root and air-foil and with at least one of the pieces of the two-piece structure having a plurality of spanwise extending grooves extending throughout the air-foil and through the root part, the two pieces of the blade being bonded together in clamshell fashion with the grooves in the finished blade providing spanwise-directed internal cooling passages.

This arrangement permits the provision of the cooling passages in parts of the air-foil which have a contour precluding straight line spanwise-directed cooling passages.

The invention will now be described, by way of example, with reference to the accompanying drawings:

Figure 1 is a top view of a turbine blade with the extremity or tip of the air-foil part of the blade being closest to the viewer;

Figure 2 is a partly-broken, fragmentary isometric view of a blade;

Figure 3 is a fragmentary isometric view of an upstream part of one side of the root of the blade; and

Figures 4-7 are fragmentary sectional views corresponding to those views taken along the lines IV-IV, V-V, VI-VI, and VII-VII of Figure 1 and illustrating the successive change in angles of the passages in the root section at successive positions from the leading toward the trailing edge of the blade.

The particular blade example for purposes of description herein is a third row blade as currently used on a large gas turbine currently identified as the W501 by applicant's assignee. While only a single blade is illustrated, those having ordinary skill in the art will appreciate that a series of these individual blades are fastened by their root portions to the circumference of a rotor disc in the turbine in the conventional fashion.

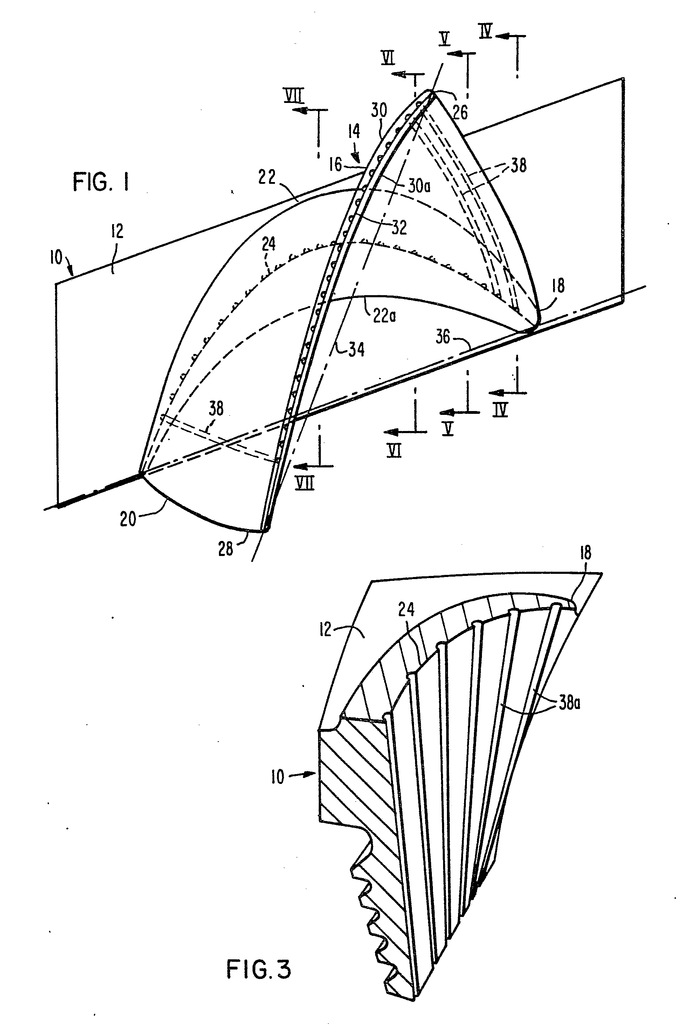

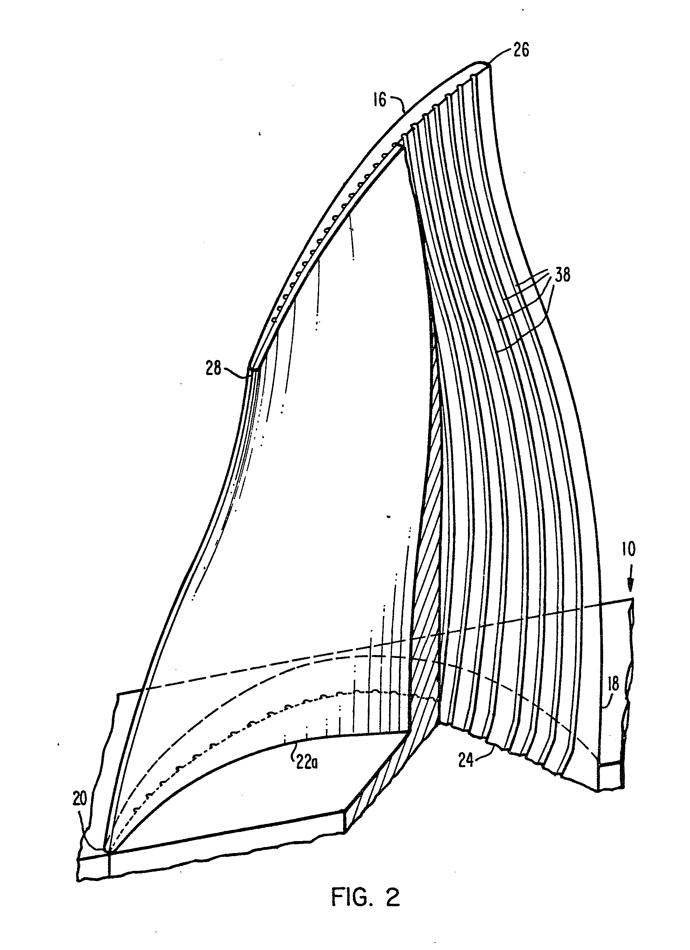

In Figure 1, the root section 10 has a top or radially-outwardly facing platform 12 into which the air-foil section of the blade 14, merges and projects radially-outwardly or upwardly to terminate in the upper tip edge 16 of the blade.

The base or hub of the air-foil at the platform 12 is relatively thick throughout most of its length from the leading edge 18 to its trailing edge 20 as indicated by the opposite edge lines 22 and 22a of the hub part of the air-foil. The camber of the hub is relatively deep as indicated by the camber dashline 24 for the hub.

In contrast to the hub, the extremity or tip 16 of the air-foil is relatively thin throughout its length from the leading to the trailing edges 26 and 28 at the extremity as indicated by the opposite face lines 30 and 30a and the camber at the tip is relatively shallow as indicated by the line 32. Thus, there is a significant taper of the air-foil from the hub to its tip. Finally, the air-foil has a significantly twisted contour as may be seen by the angular displacement of the chord line 34 of the tip relative to the chord line 36 of the hub.

It is this twisted and tapered configuration, along with the differences in camber of the hub and tip, which preclude spanwise-directed, straight line passages throughout much of the air-foil part of the blade. It is the aim of the invention to provide a blade arrangement in which internal spanwise passages through the air-foil and root are provided for cooling air even though they may not be provided with conventional practice as outlined in the background of the invention.

Accordingly, the blade is comprised of two initially separate parts with grooves being provided in a facing surface of at least one of the parts and the parts are then placed together in a term "clamshell" fashion and bonded by any suitable means such as diffusion bonding. In Figure 1, the parting surfaces at the air-foil tip follow the camber line 32 while the parting surfaces at the hub of the air-foil and at the platform 12 of the root 10 follow the camber line 24.

Referring now to Figure 2 in which a part of the one-piece of the two-piece blade structure is broken away, a plurality of spanwise-directed grooves 38 are provided in a facing surface of one part of the blade before the two parts of the blade are assembled together and bonded. When the two parts of the blade are assembled and bonded, these grooves, of course, form the internal cooling passages for the blade.

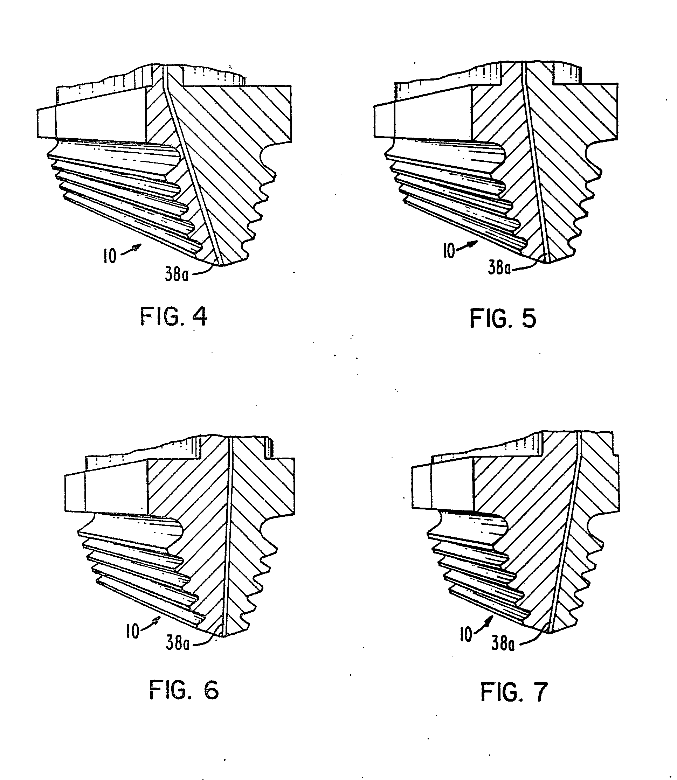

As shown in Figure 3, the root 10 may be provided with the conventional inverted fir tree design for fastening the roots to the rotor of the turbine. Since the base of the root is significantly narrower than the width of the platform 12, and because of the relatively deep camber 24 with the grooves in the one parting surface being spaced across a significant extent of the platform width, a number of the grooves 38a in the root extend at angles as shown to translate to the root centerline at the base of the root. This angular disposition of the grooves 38a in the root at different locations is also readily perceivable from Figures 4-7.

While the grooves 38 have been shown as being provided in only one facing surface of one part of the blade, it will be apparent that in accordance with the principles of the invention the grooves could be provided in both facing surfaces of the parts to form passages which are circular in cross section rather than semicircular, or could have any other desirable shape. Further, the grooves in the root can be made larger in cross section than the grooves in the air-foil for the purpose of reducing air flow resistance in the root passages. Depending upon whether the blade is forged or cast, the grooves and passages may be either machined or formed during casting. Further, the passages in the blade may be tapered throughout a part or the whole of the blade, or have different cross-sectional areas at different span points.

Although the embodiment described above employs blade halves with facing-parting-surfaces following the camber lines throughout the air-foil, it will be apparent that a division other than the camber line could be employed.

7

CLAIMS:

1. A gas-turbine blade comprising a root part and an air-foil part, the air-foil part having cambers which change from a deep camber adjacent said root part to a relatively shallow camber at the air-foil extremity said air-foil part being progressively twisted and tapered between said root part and said extremity the air-foil part having a chord line at said air-foil extremity which is angularly displaced relative to the chord line of said air-foil part adjacent said root part said blade comprising a two-piece structure having facing-parting-surfaces in the air-foil part along camber-shaped lines, at least one of the pieces of said two-piece structure having a plurality of spanwise-extending grooves open to a corresponding plurality of grooves extending through said root part, said root part having facing-parting-surfaces adjacent said air-foil part along the camber lines of the air-foil thereat, said two pieces of said two-piece structure being bonded together in clamshell fashion said changing cambers and chord lines, and said twisted and tapered configuration, resulting in a contoured shape of the air-foil part precluding straight line spanwise-directed internal passages throughout at least a part of the air-foil part requiring passages for the flow of cooling air.

2. A blade as claimed in claim 1 wherein said facing-parting-surfaces of said root at its base, throughout the extent of said grooves therein, corresponds generally to the centerline of said base.

3. A blade as claimed in claim 1 or 2 including a root section and an air-foil section, comprising said air-foil section having a hub and tip, with the hub having a deep camber and the tip a shallow camber, said air-foil being tapered and twisted from hub to tip sufficiently to preclude, throughout at least a part of the air-foil length from leading to trailing edge, straight line spanwise-directed internal passages in said air-foil, said blade comprising two initially separate pieces, each comprising an air-foil part and a root part monolithic therewith, the initially parting surfaces of said air-foil following camber-shaped lines of said air-foil, at least one of the parting surfaces of the air-foil having spanwise-directed grooves formed therein, said two initially separate pieces being assembled in clamshell fashion and bonded to form a unitary blade with said grooves providing internal cooling passages in said air-foil section.

4. A gas turbine blade, constructed and adapted for use, substantially as hereinbefore described and illustrated with reference to the accompanying drawings.

0194883

FIG. 1

FIG.3

FIG. 2

0194883

FIG. 4

FIG. 5

FIG. 6

FIG. 7